# EUROPÄISCHE PATENTSCHRIFT

(11) **EP 0 920 115 B1**
(45) Veröffentlichungstag und Bekanntmachung des Hinweises auf die Patenterteilung: **11.02.2004**
(21) Anmeldenummer: 98890347.2
(22) Anmeldetag: 23.11.1998
(51) Int. Cl.: H02M 3/335, H02M 3/338, H02J 9/06

(54) **Sperrwandler**
Flyback converter
Convertisseur à recupération

(30) Priorität: 25.11.1997 AT 199897
(43) Veröffentlichungstag der Anmeldung: 02.06.1999
(73) Patentinhaber: Siemens Aktiengesellschaft Österreich, 1210 Wien (AT)
(72) Erfinder: Eckl, Gerald, Dipl.-Ing., 2123 Schleinbach (AT)
(74) Vertreter: Matschnig, Franz, Dipl.-Ing.

(56) Entgegenhaltungen:
- US-A- 5 602 726
- PATENT ABSTRACTS OF JAPAN vol. 1997, no. 06, 30. Juni 1997 (1997-06-30) & JP 09 046929 A (FUJITSU DENSO LTD), 14. Februar 1997 (1997-02-14)

## Beschreibung

Die Erfindung bezieht sich auf einen Sperrwandler mit einem Übertrager, mit einer ersten Primärwicklung und einem ersten Primärteil, bestehend aus einem ersten, von einer ersten Ansteuerschaltung gesteuerten Schalter, über welchen eine erste Eingangsgleichspannung an die erste Primärwicklung legbar ist, mit einer zweiten Primärwicklung und mit einem zweiten Primärteil, bestehend aus einer zweiten Primärwicklung und einem zweiten, von einer zweiten Ansteuerschaltung gesteuerten Schalter, über welchen die zweite Primärwicklung an eine zweite Eingangsgleichspannung legbar ist, wobei jeder Ansteuerschaltung zumindest ein aus der Flussänderung in der Abmagnetisierungsphase abgeleitetes Steuersignal zugeführt ist und jede Ansteuerschaltung zum Öffnen des zugehörigen Schalters am Ende der Magnetisierung und zum Schließen nach Abmagnetisierung des Kernes ausgebildet ist.

Sperrwandler als Stromversorgungsgeräte sind in einer großen Anzahl von Ausführungen bekannt geworden, wobei eine Gleichspannung, die gegebenenfalls durch Gleichrichtung aus einem Wechselspannungsnetz erhalten wird, mittels des Sperrwandlers in eine im allgemeinen galvanisch getrennte Ausgangsgleichspannung umgewandelt wird. Die Schaltfrequenzen liegen im allgemeinen oberhalb des Hörbereiches. Sperrwandler sind beispielsweise bekannt aus Hirschmann/Hauenstein, "Schaltnetzteile", Verlag Siemens 1990, Thiel, "Professionelle Schaltnetzteilapplikationen", Franzis Verlag 1996, Kilgenstein, "Schaltnetzteile in der Praxis", Vogel-Fachbuch 1988, WO 94/22 207 und DE 19613 136 A1.

Die Funktion eines Sperrwandlers wird ebenso als bekannt vorausgesetzt, wie die für die Ansteuerung des gesteuerten Schalters verwendbaren Ansteuerschaltungen, die gleichfalls in den oben genannten Literaturstellen näher beschrieben sind.

Häufig liegt der Fall vor, dass die Stromversorgung eines Gerätes wechselweise aus zwei verschiedenen Netzen erfolgen soll, beispielsweise aus einem Wechselstromnetz und einer Batterie oder aus zwei verschiedenen Wechselstromnetzen. Hierzu hat man nach dem Stand der Technik Umschalter vorgesehen, die bei Absinken der Spannung eines Netzes unterhalb eines gewissen Mindestwertes ein Schaltnetzteil an das andere Netz legen. Dieses Umschalten ist natürlich ein diskontinuierlicher Vorgang, der sich für angeschlossene Verbraucher störend bemerkbar machen kann. Darüber hinaus ist in keiner Weise ein Energieausgleich zwischen den Netzen möglich.

Im Zusammenhang mit Flusswandlem ist es beispielsweise aus der DE 43 42 327 bekannt geworden, zur Lösung des Problems einer unterbrechungsfreien Übernahme der Energielieferung zwischen zwei Wandlern, deren Primärwicklungen auf einem gemeinsamen Kern anzuordnen. Die beschriebene Lösung ist jedoch aufwendig, denn einerseits ist eine eigene Ladeschaltung mit einem gesteuerten Schalter für eine zu ladende Batterie vorgesehen, und andererseits bedingt das Flusswandlerkonzept die Verwendung von Speicherinduktivitäten.

Ein anderes Flusswandlerkonzept gemäß der US 4,564,767 A geht ebenfalls von zwei Primärwicklungen auf einem gemeinsamen Übertragerkern aus, wobei eine Spannungsversorgung aus dem Netz, nämlich einer Zwischenkreisspannung, oder aus einer Batterie erfolgen soll. Dabei ist ein eigener Netzspannungsdetektor vorgesehen, welcher den Pulsbreitenmodulator des von der Batterie versorgten Wandlerteils ansteuert. Für die Batterie ist ein eigener Ladeteil erforderlich, und an ein Umschalten des Wandlers zwischen zwei unterschiedlichen Stromnetzen ist nicht gedacht. Um eine rasche Übernahme zwischen den Betriebsarten Netz-Batterie zu gewährleisten, sind aufwendige Maßnahmen erforderlich, die zusammen mit der gleichfalls notwendigen Speicherinduktivität den Wandler teuer machen.

Eine weitere Lösung des Zusammenschaltens zweier aus verschiedenen Spannungsquellen, nämlich einem Wechselspannungsnetz und einer Batterie, betriebener Wandler ist in der JP 09 04 6929A geoffenbart. Es werden zwei getrennte Transformatoren verwendet und die getrennten Schalter beider Netzteile, welche eine Hauptstromversorgung und eine Hilfsstromversorgung darstellen, werden gemeinsam über eine sekundärseitige Spannungsüberwachung und Optokoppler gesteuert. Bezweckt wird ein rasches Hochfahren der von einem Netz betriebenen Hauptstromversorgung nach einem Netzausfall, der von der von einer Batterie betriebenen Hilfsstromversorgung überbrückt wurde.

Bei einem Sperrwandler der eingangs genannten Art, der aus der US 5,602,726 A hervorgeht, wird die erste Eingangsspannung aus einem Wechselspannungsnetz abgeleitet, und die zweite Eingangsgleichspannung liefert ein Akkumulator. Der zweite Primärteil besitzt eine zusätzliche Wicklung, welche das Laden des Akkumulators ermöglicht, solange das Wechselspannungsnetz aufrecht ist. Wenngleich dieser Sperrwandler nur einen einzigen Übertrager verwendet, verursacht einerseits die besondere Ausbildung des zweiten Primärteils zusätzliche Kosten und andererseits kann nur entweder der erste oder der zweite Primärteil Energie an die Sekundärseite liefern.

Eine Aufgabe der Erfindung liegt darin, einen Sperrwandler anzugeben, bei welchem die oben angeführten Nachteile beseitigt oder vermindert sind.

Diese Aufgabe wird mit einem Sperrwandler der eingangs genannten Art gelöst, bei welchem erfindungsgemäß der erste und der zweite Primärteil identisch ausgebildet sind und das Verhältnis der Windungszahlen der beiden Primärwicklungen entsprechend dem Verhältnis der Soll-Werte der beiden Eingangsgleichspannungen gewählt ist.

Der Sperrwandler ist für eine Speisung aus zwei Eingangsgleichspannungen bzw. Netzen geeignet, wobei bei Ausfall einer Eingangsspannung der Wandler kontinuierlich weiterarbeitet und die andere Eingangsgleichspannung die benötigte Energie liefert. Bei einem langsamen Absinken einer Eingangsgleichspannung kann der Wandler auch von beiden Eingangsspannungen Energie an di e Sekundärseite liefern. Dank der identischen Ausbildung beider Primärteile ist neben einer vereinfachten und billigeren Herstellung auch ein universeller Einsatz möglich, z. B. der Betrieb an zwei Wechselspannungsnetzen oder an einem Wechselspannungsnetz und an einem Akkumulator, der bei Netzbetrieb geladen wird. Durch die Wahl der Windungszahlen ist ohne zusätzlichen Schaltungsaufwand und bei minimalen Verlusten das "nahtlose" Übergehen von einer Primärspeisung zur anderen sichergestellt.

In vorteilhafter Weise kann der Übertrager zumindest eine Steuerwicklung aufweisen, deren Spannung der Ansteuerschaltung zugeführt ist. Auf diese Weise kann die Ansteuerschaltung ohne zusätzliche Potentialtrennungsprobleme Informationen über das Ende der Magnetisierungsphase erhalten.

In Fällen, in welchen ein Energieaustausch zwischen den Netzen nicht erforderlich oder nicht gewünscht ist, kann vorgesehen sein, dass die beiden Eingangsgleichspannungen über Sperrdioden zugeführt sind.

Bei einer Variante ist vorgesehen, dass zumindest eine Sensorschaltung vorgesehen ist, die dazu eingerichtet ist, den jeweiligen gesteuerten Schalter bei Umkehrung des Gleichstromflusses offen zu halten. Auf diese Weise kann man kurzschlussähnliche Zustände ausschließen. Um einen Energieübergang in das andere Netz zu ermöglichen, ist vorgesehen, dass dem gesteuerten Schalter eine Inversdiode parallel geschaltet ist. Bei vielen Transistorschaltern ist eine solche Diode allerdings von vornherein integriert oder, wie bei MOS-FET-Transistoren, herstellungsbedingt vorhanden.

Falls eine Regelung erwünscht ist, kann vorgesehen sein, dass ein Komparator zum Vergleich der Ausgangsgleichspannung mit einem Referenzwert und zur Abgabe eines Regelsignals an zumindest eine Ansteuerschaltung eingerichtet ist, und/oder dass ein Komparator zum Vergleich des Ausgangsstroms mit einem Referenzwert und zur Abgabe eines Regelsignals an zumindest eine Ansteuerschaltung eingerichtet ist.

Um dem Benutzer bekannt geben zu können, aus welchem Netz gerade Strom bezogen wird, ist bei einer Variante vorgesehen, dass der Sekundärwicklung ein bezüglich des Gleichrichters umgekehrt gepolter Gleichrichter und diesem ein Kondensator nachgeschaltet ist, wobei zum Vergleich der an diesem Kondensator auftretenden Durchflussspannung mit einem Referenzwert ein Komparator vorgesehen ist, dessen Ausgangssignal zur Anzeige jener Eingangsgleichspannung heranziehbar ist, von welcher die Energie bzw. überwiegende Energie bezogen wird.

Die Erfindung samt weiterer Vorteile ist im folgenden anhand von Ausführungsbeispielen näher erläutert, die in der Zeichnung veranschaulicht sind. In dieser zeigen
Fig.1 ein Prinzipschaltbild eines erfindungsgemäßen Sperrwandlers und
Fig.2 eine Variante dieser Schaltung mit verschiedenen zweckmäßigen Merkmalen.

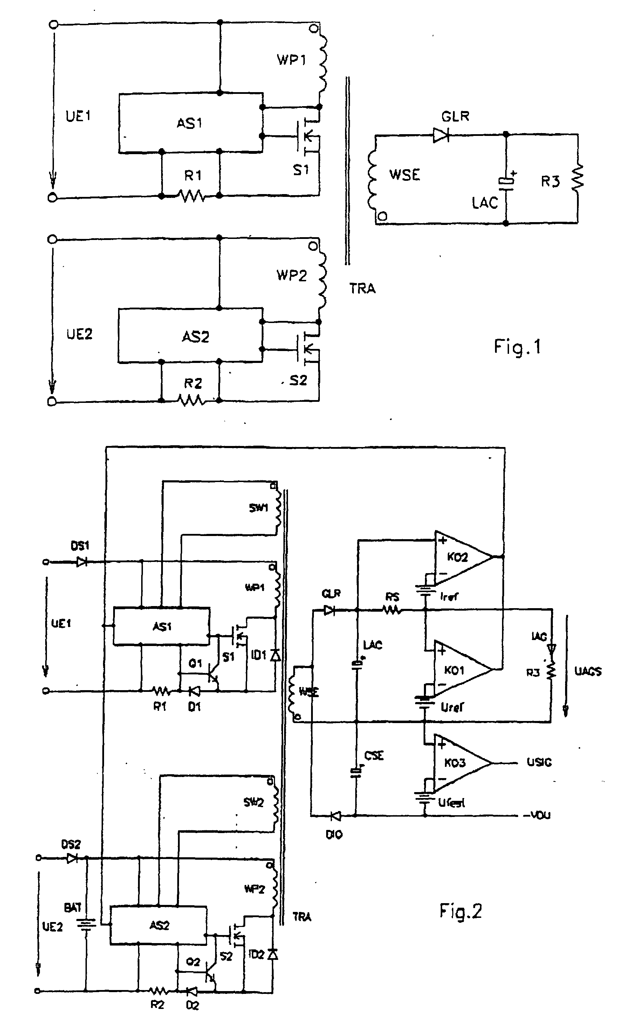

Gemäß Fig.1 besteht ein Sperrwandler aus einem Übertrager TRA, der eine erste Primärwicklung WP1 sowie eine zweite Primärwicklung WP2 und überdies eine Sekundärwicklung WSE besitzt. Diese Wicklungen sind über den Kern des Übertragers magnetisch miteinander gekoppelt.

Jeder der beiden Primärwicklungen WP1 und WP2 ist ein gesteuerter Schalter S1 bzw. S2 zugeordnet, sodass über diesen Schalter eine Eingangsgleichspannung UE1 bzw. eine Eingangsgleichspannung UE2 an die erste bzw. zweite Primärwicklung, WP1 bzw. WP2 gelegt werden kann. In beiden Fällen ist ein Stromsensor R1 bzw. R2 vorgesehen, der einer Ansteuerschaltung AS1 bzw. AS2 eine Information über den Stromverlauf durch die Primärwicklung WP1 bzw. WP2 liefert. Beide Ansteuerschaltungen werden im vorliegenden Fall von der Eingangsgleichspannung UE1 bzw. UE2 gespeist, doch kann gemäß dem Stand der Technik hiefür auch je eine eigene Wicklung des Übertragers mit einem nachgeschalteten Gleichrichter und einem Kondensator vorgesehen sein. Die Eingangsgleichspannungen UE1 bzw. UE2 können sogenannte Zwischenkreisspannungen sein oder es kann eine Eingangsgleichspannung durch Gleichrichtung aus einem Wechselstromnetz gewonnen sein, wogegen die andere Eingangsgleichspannung aus einem Batterienetz, z. B. einer Notstrombatterie stammt. Die Ansteuerschaltungen AS1 bzw. AS2 liefern den entsprechenden gesteuerten Schaltern S1 bzw. S2 Schaltimpulse, wobei bei Schließen des Schalters die Magnetisierungsphase beginnt und Energie in den Übertrager einfließt und nach Öffnen des Schalters diese Magnetisierungsphase beendet ist und die Energie in die Sekundärwicklung WSE fließt, wobei der Sekundärwicklung WSE ein Gleichrichter GLR und ein Ladekondensator LAC nachgeschaltet sind. Der Gleichrichter ist hier als einzige Diode GLR gezeigt, doch sind andere Ausführungsformen, wie eine Vollweggleichrichtung oder eine Synchrongleichrichtung möglich. Der Verbraucher des Sperrwandlers ist hier als Widerstand R3 eingezeichnet.

Die Funktion des Sperrwandlers ist nun im folgenden beschrieben. Solange die beiden Eingangsgleichspannungen UE1 und UE2 gleich sind, arbeiten beide Sperrwandlerteile synchron, da eine Synchronisierung über die magnetisch gekoppelten Wicklungen WP1 und WP2 erfolgt, und liefern zu gleichen Teilen Energie an die Sekundärseite und letztlich zu dem Verbraucher R3. Falls beispielsweise die Eingangsgleichspannung UE2 zusammengebrochen ist, arbeitet lediglich der in der Schaltung obere Sperrwandlerteil und bezieht die Energie aus der Eingangsgleichspannung UE1, doch wird wegen der magnetischen Kopplung auch in der zweiten Sekundärwicklung WP2 eine Wechselspannung induziert, die - und darauf wird weiter unten eingegangen - durch Gleichrichtung zur Aufrechterhaltung der zweiten Eingangsgleichspannung UE2 oder zum Laden eines Akkumulators herangezogen werden kann. Im allgemeinen werden die Spannungsunterschiede zwischen den Eingangsgleichspannungen UE1 und UE2 entweder sehr gering oder aber sehr groß sein, sodass die vorhin beschriebenen beiden Fälle repräsentativ für das Verhalten des erfindungsgemäßen Sperrwandlers sind. Übergangsstadien zwischen den beiden genannten Fällen sind natürlich möglich, wobei dann eine Aufteilung der Energielieferung aus den beiden Sperrwandlerteilen erfolgt, die immer synchron schalten werden. Eine solche Energieaufteilung ist nur dann nicht vorhanden, falls absichtlich Gegenmaßnahmen, die weiter unten erläutert sind, hiezu vorgesehen sind.

Es wird nun auf Fig. 2 Bezug genommen, die im Prinzip eine erweiterte Schaltung nach Fig.1 zeigt. Es werden daher nur die entsprechenden Erweiterungen und ihre Funktion erläutert.

In beiden Eingangskreisen der Sperrwandlerteile ist eine Sperrdiode DS1 bzw. DS2 eingefügt, die verhindert, dass bei Absinken einer Eingangsgleichspannung der Sperrwandler versucht, in das Netz Energie zu liefern, was bei verschiedenen Netzen zu einer Art Kurzschlusszustand führen würde bzw. in vielen Fällen auch nicht erwünscht ist. Bei dem zweiten Eingangskreis ist eine Batterie BAT eingezeichnet, die aus dem ersten Netz mit der Eingangsgleichspannung UE1 aufgeladen werden kann. Falls das Netz UE1 ausfällt, liefert dann diese Batterie BAT die für den Betrieb des Sperrwandlers erforderliche Spannung bzw. Energie. Um einen Gleichspannungsfluss in die jeweils andere Richtung zu ermöglichen, sind hier die gesteuerten Schalter S1 bzw. S2 überbrückende Inversdioden ID1, ID2 eingezeichnet, wozu allerdings anzumerken ist, dass diese Dioden in den meisten Fällen bei Transistorschaltern integriert sind. Eine weitere Besonderheit der Eingangskreise gegenüber der Schaltung nach Fig.1 darin, dass für jede der Ansteuerschaltungen AS1 bzw. AS2 eine eigene Steuerwicklung SW1 bzw. SW2 vorgesehen ist, die galvanisch getrennt eine Information über den Stromfluss in dem Übertrager an die Ansteuerschaltungen liefert. Diese Maßnahme ist dem Fachmann bekannt und auch in den eingangs genannten Literaturstellen beschrieben.

Falls die Eingangsgleichspannung UE2 konstant ist und die Eingangsgleichspannung UE1 größer als die Eingangsgleichspannung UE2 - vorausgesetzt, identisch aufgebaute Sperrwandlerteile und -wicklungen - würde der erste Sperrwandlerteil versuchen, aus dem Netz mit der Eingangsgleichspannung UE1 Energie in die Konstantspannungsquelle UE2 zu liefern, was einem Kurzschluss gleich käme. Dagegen wirkt zunächst die Sperrdiode DS2, doch empfiehlt es sich, in diesem Betriebsfall den zweiten gesteuerten Schalter S2 stillzulegen, d. h. über die Ansteuerschaltung AS2 zu öffnen. Zu diesem Zweck ist eine Diode D2 vorgesehen, wobei die an ihr abfallende Spannung dem Basisemitterkreis eines Transistors Q2 zugeführt wird, der mit seinem Kollektor an der Basis des Schalttransistors, nämlich gesteuerten Schalters S2 liegt. Wenn ein Stromfluss von dem ersten Sperrwandlerteil mit der Eingangsspannung UE1 in den zweiten Sperrwandlerteil mit der Eingangsspannung UE2 vorliegt, wird der Spannungsabfall an der Basisemitterstrecke so groß, dass der Transistor Q2 leitend wird und der Schalter S2 öffnet. Eine analoge Vorkehrung ist durch die Diode D1 und den Transistor Q1 in dem ersten Sperrwandlerteil getroffen. Will man jedoch auch die Möglichkeit vorsehen, die Batterie BAT auch bei Ausfall der Spannung UE2 zu laden, so lässt man die Diode D2 und den Transistor Q2 entfallen.

Sekundärseitig erkennt man eine Spannungs- und Stromregelung, wobei für die Spannungsregelung ein Komparator KO1 vorgesehen ist, der die Ausgangsgleichspannung UAG bzw. einen Teil derselben mit einer Referenzspannung U_{Ref} vergleicht und ein Regelsignal an die Ansteuerschaltung AS1 bzw. AS2 liefert. In gleicher Weise wird sekundärseitig der Ausgangsstrom IAG mittels eines Messwiderstandes RS gemessen und in einem Komparator KO2 mit einem Referenzwert I_{Ref} verglichen, wobei es sich - wie üblich - um den Vergleich von zwei Spannungen handelt. Auch das Ausgangssignal des Komparators KO2 wird den Ansteuerschaltungen AS1 bzw. AS2 zugeführt, wobei diese Stromregelung in einfachen Fällen zur Begrenzung des Kurzschlussstromes eingesetzt wird. In dem Fachmann bekannter Weise sind verschiedene Kombinationen von Strom- und Spannungsregelung möglich und im allgemeinen werden die sekundärseitig ermittelten Regelsignale über einen Optokoppler galvanisch getrennt an die Primärseite geführt.

Beispielsweise kann der Istwert der Ausgangsspannung auch über die Spannung der bzw. einer primären Hilfswicklung(en) erfasst und zur Spannungsregelung des Ausgangskreises herangezogen werden. Weiters kann mehr als eine Sekundärwicklung vorgesehen sein, um zwei oder mehr getrennte Ausgangs(gleich)spannungen zu erhalten.

Eine Besonderheit des Sperrwandlers liegt darin, dass er im allgemeinen seine Energie aus einem von zwei Netzen bezieht, wobei der Anwender oft eine Information dahingehend wünscht, aus welchem der Netze z. B. einer Notstromversorgung, der Sperrwandler betrieben wird. Dazu ist der Sekundärwicklung WSE ein bezüglich des Gleichrichters GLR umgekehrt gepolter Gleichrichter DIO vorgesehen, dem ein Kondensator CSE nachgeschaltet ist. Für diesen Zweig arbeitet der Wandler nicht als Sperrwandler, sondern als Durchflusswandler, d. h. an dem Kondensator CSE tritt eine Durchflussspannung auf, die der Primärspannung proportional ist und mit einem Referenzwert U_{fest} unter Zuhilfenahme eines weiteren Komparators KO3 verglichen wird. Dessen Ausgangssignal U_{Sig} kann dann zur Anzeige dafür verwendet werden, von welchem der beiden Netze die Energie bzw. die überwiegende Energie bezogen wird. Schaltnetzteile nach der Erfindung eignen sich wegen der geringen Verluste und der niedrigen Kosten besonders für die Speisung von Telefon-, insbesondere ISDN-Anschlussteilen, die einerseits aus dem 230 Volt Wechselstromnetz und andererseits aus dem Telekom-Amtsnetz (25 bis 125 Volt Gleichspannung) gespeist werden sollen. Dabei erfolgt dann bei Abfall der Lichtnetzspannung unter ca. 180 Volt ein selbsttätiger Übergang auf Amtsspeisung, und bei Spannungen des Lichtnetzes unter ca. 120 Volt wird die gesamte lastseitig entnommene Energie aus der Amtsleitung geliefert.

Begnügt man sich mit einer groben Regelung der Ausgangsspannung, z. B. auf ± 10 %, können die Komparatoren und die Rückführung der daraus abgeleiteten Signale entfallen, da über die Flussänderung während der Abmagnetisierungsphase (Windungsspannung) ausreichende Information an beliebigen Wicklungen des Übertragers, so auch an den Wicklungen SW1, SW2 bei der Ausführung nach Fig. 2, vorliegt.

## Patentansprüche

1. Sperrwandler mit einem Übertrager (TRA), mit einer ersten Primärwicklung (WP1) und einem ersten Primärteil, bestehend aus einem ersten, von einer ersten Ansteuerschaltung (AS1) gesteuerten Schalter (S1), über welchen eine erste Eingangsgleichspannung (UE1) an die erste Primärwicklung legbar ist, mit einer zweiten Primärwicklung (WP2) und mit einem zweiten Primärteil, bestehend aus einer zweiten Primärwicklung und einem zweiten, von einer zweiten Ansteuerschaltung (AS2) gesteuerten Schalter (S2), über welchen die zweite Primärwicklung an eine zweite Eingangsgleichspannung legbar ist, wobei jeder Ansteuerschaltung zumindest ein aus der Flussänderung in der Abmagnetisierungsphase abgeleitetes Steuersignal zugeführt ist und jede Ansteuerschaltung zum Öffnen des zugehörigen Schalters am Ende der Magnetisierung und zum Schließen nach Abmagnetisierung des Kernes ausgebildet ist,
**dadurch gekennzeichnet, dass**
der erste und der zweite Primärteil identisch ausgebildet sind und das Verhältnis der Windungszahlen der beiden Primärwicklungen (WP1, WP2) entsprechend dem Verhältnis der Soll-Werte der beiden Eingangsgleichspannungen (UE1, UE2) gewählt ist.

2. Sperrwandler nach Anspruch 1, **dadurch gekennzeichnet, dass** der Übertrager zumindest eine Steuerwicklung (SW1, SW2) aufweist, deren Spannung der Ansteuerschaltung (AS1, AS2) zugeführt ist.

3. Sperrwandler nach Anspruch 1 oder 2, **dadurch gekennzeichnet, dass** die beiden Eingangsgleichspannungen (UE1, UE2) über Sperrdioden (DS1, DS2) zugeführt sind.

4. Sperrwandler nach einem der Ansprüche 1 bis 3, **dadurch gekennzeichnet, dass** zumindest eine Sensorschaltung (D1, Q1; D2, Q2) vorgesehen ist, die dazu eingerichtet ist, den jeweiligen gesteuerten Schalter (S1, S2) bei Umkehrung des Gleichstromflusses offenzuhalten.

5. Sperrwandler nach einem der Ansprüche 1 bis 4, **dadurch gekennzeichnet, dass** dem gesteuerten Schalter (S1, S2) eine Inversdiode (ID1, ID2) parallelgeschaltet ist.

6. Sperrwandler nach einem der Ansprüche 1 bis 7, **dadurch gekennzeichnet, dass** ein Komparator (KO1) zum Vergleich der Ausgangsgleichspannung (AGS) mit einem Referenzwert (U_{Ref}) und zur Abgabe eines Regelsignals an zumindest eine Ansteuerschaltung (AS1, AS2) eingerichtet ist.

7. Sperrwandler nach einem der Ansprüche 1 bis 8, **dadurch gekennzeichnet, dass** ein Komparator (KO2) zum Vergleich des Ausgangsstroms (IAG) mit einem Referenzwert (I_{Ref}) und zur Abgabe eines Regelsignals an zumindest eine Ansteuerschaltung (AS1, AS2) eingerichtet ist.

8. Sperrwandler nach einem der Ansprüche 1 bis 9, **dadurch gekennzeichnet, dass** der Sekundärwicklung (WSE) ein bezüglich des Gleichrichters (GLR) umgekehrt gepolter Gleichrichter (DIO) und diesem ein Kondensator (CSE) nachgeschaltet ist, wobei zum Vergleich der an diesem Kondensator auftretenden Durchflussspannung (VDU) mit einem Referenzwert (U_{fest}) ein Komparator (KO3) vorgesehen ist, dessen Ausgangssignal U_{sig} zur Anzeige jener Eingangsgleichspannung heranziehbar ist, von welcher die Energie bzw. überwiegende Energie bezogen wird.

## Claims

1. Flyback converter having a transformer (TRA), having a first primary winding (WP1) and a first primary part, consisting of a first switch (S1) controlled by a first control circuit (AS1), by means of which switch a first input direct voltage (UE1) can be applied to the first primary winding, having a second primary winding (WP2) and having a second primary part, consisting of a second primary winding and a second switch (S2) controlled by a second control circuit (AS2), by means of which switch the second primary winding can be can be connected to a second input direct voltage, wherein at least one control signal derived from the change in flow in the demagnetising phase is supplied to each control circuit and each control circuit is designed to open the associated switch at the end of magnetisation and to close after demagnetisation of the core,
**characterised in that**
the first and second primary part are formed identically and the ratio of the number of windings of the two primary windings (WP1, WP2) is selected to correspond to the ratio of the desired values of the two input direct voltages (UE1, UE2).

2. Flyback converter as claimed in claim 1, **characterised in that** the transformer has at least one control winding (SW1, SW2), the voltage of which is supplied to the control circuit (AS 1, AS2).

3. Flyback converter as claimed in claim 1 or 2, **characterised in that** the two input direct voltages (UE1, UE2) are supplied via blocking diodes (DS1, DS2).

4. Flyback converter as claimed in any one of claims 1 to 3, **characterised in that** at least one sensor circuit (D1, Q1; D2, Q2) is provided which is arranged to keep the respective controlled switch (S1, S2) open during reversal of the direct current flow.

5. Flyback converter as claimed in any one of claims 1 to 4, **characterised in that** an inverse diode (ID1, ID2) is connected in parallel with the controlled switch (S1, S2).

6. Flyback converter as claimed in any one of claims 1 to 7 [sic], **characterised in that** a comparator (KO1) is arranged to compare the output direct voltage (AGS) with a reference value (U_{Ref}) and to emit an adjusting signal to at least one control circuit (AS1, AS2).

7. Flyback converter as claimed in any one of claims 1 to 8 [sic], **characterised in that** a comparator (KO2) is arranged to compare the output current (IAG) with a reference value (I_{Ref}) and to emit an adjusting signal to at least one control circuit (AS1, AS2).

8. Flyback converter as claimed in any one of claims 1 to 9 [sic], **characterised in that** a rectifier (DIO), which has reversed polarity with respect to the rectifier (GLR), is connected downstream of the secondary winding (WSE) and a capacitor (CSE) is connected downstream of this rectifier (DIO), wherein in order to compare the flow voltage (VDU) occurring at this capacitor with a reference value (U_{fest}) a comparator (KO3) is provided, the output signal U_{sig} of which is used to indicate the input direct voltage from which the power or the majority of the power is drawn.

## Revendications

1. Convertisseur de blocage comprenant un transformateur (TRA), comportant un premier bobinage primaire (WP1) et un premier élément primaire, comprenant un premier commutateur (S1) commandé par un premier circuit d'excitation (AS1) permettant de fournir une première tension continue d'entrée (UE1) au premier bobinage primaire, avec un deuxième bobinage primaire (WP2) et un deuxième élément primaire, comprenant un deuxième bobinage primaire et un deuxième commutateur (S2) commandé par un deuxième circuit d'excitation (AS2) permettant de fournir une deuxième tension continue d'entrée au deuxième bobinage primaire, chaque circuit d'excitation recevant au moins un signal de commande déduit de la variation de flux dans la phase de démagnétisation, et chaque circuit d'excitation étant conçu pour ouvrir le commutateur associé à la fin de la magnétisation et pour fermer le noyau après la démagnétisation,
**caractérisé en ce que**
le premier et le deuxième éléments primaires présentent une forme identique, et **en ce que** le rapport du nombre de spires des deux bobinages primaires (WP1, WP2) est choisi selon le rapport des valeurs de consigne des deux tensions continues d'entrée (UE1, UE2)

2. Convertisseur de blocage selon la revendication 1, **caractérisé en ce que** le transformateur présente au moins un bobinage de commande (SW1, SW2), dont la tension est amenée au circuit d'excitation (AS1, AS2).

3. Convertisseur de blocage selon la revendication 1 ou 2, **caractérisé en ce que** les deux tensions continues d'entrée (UE1, UE2) sont amenées par des diodes de blocage (DS1, DS2).

4. Convertisseur de blocage selon l'une quelconque des revendications 1 à 3, **caractérisé en ce qu'**au moins un circuit de capteur (D1, Q1 ; D2, Q2) est prévu servant à maintenir ouvert le commutateur (S1, S2) respectivement commandé lors de l'inversion du flux de courant continu.

5. Convertisseur de blocage selon l'une quelconque des revendications 1 à 4, **caractérisé en ce qu'**une diode inverse (ID1, ID2) est montée en parallèle du commutateur (S1, S2) commandé.

6. Convertisseur de blocage selon l'une quelconque des revendications 1 à 7, **caractérisé en ce qu'**un comparateur (KO1) est prévu pour comparer la tension continue de sortie (AGS) avec une valeur de référence (U_{Ref}) et pour émettre un signal de régulation à au moins un circuit d'excitation (AS1, AS2).

7. Convertisseur de blocage selon l'une quelconque des revendications 1 à 8, **caractérisé en ce qu'**un comparateur (KO2) est prévu pour comparer le courant de sortie (IAG) avec une valeur de référence (I_{Ref}) et pour émettre un signal de régulation à au moins un circuit d'excitation (AS1, AS2).

8. Convertisseur de blocage selon l'une quelconque des revendications 1 à 9, **caractérisé en ce qu'**en aval du bobinage secondaire (WSE) un redresseur à pôles inversés (DIO) par rapport au redresseur (GLR) et en aval de celui-ci un condensateur (CSE) sont installés, pour la comparaison de la tension de passage (VDU) présente au niveau du condensateur avec une valeur de référence (U_{fest}) un comparateur (KO3) étant prévu, dont le signal de sortie U _{???} peut être utilisé pour indiquer la tension continue d'entrée fournissant l'énergie ou la plus grande partie d'énergie.
